# EUROPÄISCHE PATENTSCHRIFT

(11) **EP 3 658 478 B1**
(45) Veröffentlichungstag und Bekanntmachung des Hinweises auf die Patenterteilung: **27.03.2024**
(21) Anmeldenummer: 18746687.5
(22) Anmeldetag: 26.07.2018
(51) Int. Cl.: B65G 47/86

(54) **VORRICHTUNG ZUM HALTEN EINES BEHÄLTERS UND BEHANDLUNGSVORRICHTUNG**
DEVICE FOR HOLDING A CONTAINER AND TREATMENT DEVICE
DISPOSITIF DE RETENUE D'UN RÉCIPIENT ET DISPOSITIF DE TRAITEMENT

(30) Priorität: 26.07.2017 DE 102017116921
(43) Veröffentlichungstag der Anmeldung: 03.06.2020
(73) Patentinhaber: Krones AG, 93073 Neutraubling (DE)
(72) Erfinder: LANDLER, Bruno, 93073 Neutraubling (DE)
(74) Vertreter: Nordmeyer, Philipp Werner
(86) Internationale Anmeldenummer: PCT/EP2018/070352
(87) Internationale Veröffentlichungsnummer: WO 2019/020771

(56) Entgegenhaltungen:
- EP-A1- 1 867 600
- EP-A1- 2 881 345
- WO-A1-2011/015371

## Beschreibung

### Technisches Gebiet

Die vorliegende Erfindung betrifft eine Vorrichtung zum Halten eines Behälters in einer Behälterbehandlungsvorrichtung, bevorzugt zum Halten einer Flasche an ihrem Flaschenhals, und eine Behandlungsvorrichtung zum Behandeln eines Behälters, bevorzugt zum Transportieren eines Behälters in einer Getränkeabfüllanlage.

### Stand der Technik

Vorrichtungen zum Halten und Transportieren von Behältern in Getränkeabfüllanlagen sind bekannt. Es wird bei den Vorrichtungen zum Halten von Behältern unter anderem zwischen solchen Vorrichtungen, bei denen der Behälter in seinem Bodenbereich auf einem Transporttisch aufsteht, und solchen Vorrichtungen, bei denen der Behälter im Halsbereich gehalten wird und hängend transportiert wird, unterschieden. Letzteres wird auch als "neck-handling" bezeichnet.

Die am Halsbereich gehaltenen Behälter werden mittels Klammern gehalten, wobei die Klammern beispielsweise unter einem Halsring in einem Aufnahmebereich des Behälters angreifen. Die Klammern sind zum Halten von Behältern einer bestimmten Behältergröße beziehungsweise bestimmter Halsdimensionen ausgebildet. Sollen mit einer Transportvorrichtung Behälter einer anderen Behältergröße und/oder anderer Halsdimensionen transportiert werden, so sind deren Klammern auszutauschen. Durch dieses Umrüsten entstehen Stillstandzeiten. Zudem bedingt das Umrüsten einen Eingriff von außen. Insbesondere bei Aseptikanlangen erfordert ein solcher Eingriff von außen eine nachfolgende Sterilisation, um die Betriebsbereitschaft wieder herzustellen.

Um diesen Nachteilen Rechnung zu tragen, sind Vorrichtungen bekannt, welche asymmetrisch ausgebildete Klammerarme aufweisen.

Die WO 2008/007414 A1 zeigt eine Behälterklammer mit zwei asymmetrisch ausgebildeten Greifarmen zum Positionieren eines auf einer Auflage gelagerten Behälters, die über eine Nocke und eine Zahnradverzahnung aktiv angesteuert werden. Auch die WO 2011/121624 A1 zeigt eine aktive Klammer. Weitere aktive Klammern sind aus der EP 2 881 345 A1, WO 2011/015371 A1 und EP 1 867 600 A1 bekannt.

Ferner sind Vorrichtungen bekannt, bei welchen Magnete zur aktiven Steuerung der Klammerarme vorgesehen sind. Eine entsprechende Vorrichtung ist beispielsweise der US 2011/0198198 A1 zu entnehmen.

Bei zweiteilig ausgeführten Klammern, welche keine Verzahnung aufweisen, kann der gegriffene Behälter je nach Übergabequalität außermittig zu dessen theoretischer Teilkreisposition positioniert sein und somit etwa beim Füller nicht exakt unter dem Ventil stehen, was zu Fehlfüllungen oder zu einem Überschwappen von in den Behälter eingefüllten Füllgut führen kann.

Bei zweiteiligen Klammern mit Verzahnung, bei welchen ein erster Klammerarm und ein zweiter Klammerarm synchronisiert sind, wird der Behälter durch die Symmetrie der Greifer theoretisch mittig gehalten. Ein Nachteil hierbei ist jedoch die aufwendige Verzahnung der Klammerarme zueinander und der aufwendige Aufbau einer aktiven Ansteuerung zum Öffnen der Klammer, welche sowohl kostenintensiv als auch wartungsintensiv sind. Des Weitern ist eine hygienische Ausführung in diesem Fall aufgrund der Zahnradübersetzung und der für die aktive Ansteuerung zum Öffnen der Klammer notwendigen, relativ zueinander beweglichen Teile kaum umsetzbar.

### Darstellung der Erfindung

Ausgehend von dem bekannten Stand der Technik ist es eine Aufgabe der vorliegenden Erfindung, eine verbesserte Vorrichtung zum Halten eines Behälters bereitzustellen.

Die Aufgabe wird durch eine Vorrichtung zum Halten eines Behälters mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Halten eines Behälters in einer Behälterbehandlungsvorrichtung, bevorzugt zum Halten einer Flasche an ihrem Flaschenhals, vorgeschlagen, umfassend einen Klammerträger, einen ersten Klammerarm, der um eine erste Schwenkachse schwenkbar an dem Klammerträger angeordnet ist, und einen zweiten Klammerarm, der um eine zweite Schwenkachse schwenkbar an dem Klammerträger angeordnet ist, wobei der erste Klammerarm länger ausgebildet ist als der zweite Klammerarm, und wobei der erste Klammerarm und der zweite Klammerarm über eine Kupplungsanordnung miteinander schwenkgekoppelt sind. Erfindungsgemäß sind die Klammerarme magnetisch in eine geschlossene Position vorgespannt und ist die Vorrichtung so eingerichtet, dass die Klammerarme zum Aufnehmen eines Behälters lediglich passiv durch Einschieben des Behälters geöffnet werden.

Dadurch, dass die Klammerarme magnetisch in eine geschlossene Position vorgespannt sind, kann sichergestellt werden, dass die Klammer sich stets in der geschlossenen Position befindet. Dadurch, dass die Klammerarme lediglich passiv durch Einschieben des Behälters geöffnet werden können, kann auf eine aufwendige Konstruktion, welche anderweitig für ein aktives Öffnen der Klammerarme notwendig wäre, verzichtet werden. Mit anderen Worten ist an der Vorrichtung keine Anordnung zum aktiven Öffnen der Klammerarme vorgesehen. Eine Öffnung ohne die Anwesenheit eines Behälters kann daher im Betrieb nicht aktiv vorgenommen werden. Es handelt sich daher um eine sogenannte passive Vorrichtung.

Das Öffnen der Klammerarme erfolgt entsprechend passiv durch Einschieben des Behälters in die Klammern. Das heißt der Behälter kann in die Klammer eingeführt werden, indem er von außen in die durch die beiden Klammerarme ausgebildete Klammer eingedrückt wird. Die Klammerarme werden dabei durch die Behälterwand entgegen der magnetischen Vorspannung nach außen verschwenkt. Folglich öffnen sich die Klammerarme lediglich passiv aufgrund der Verdrängung durch den Behälter während des Einführens.

Die Klammerarme bewegen sich entsprechend der Lage der größten Abmessung, in der Regel des größten Durchmessers des Behälters, erst nach außen in eine geöffnete Position und gleiten an der Kontur des Behälters während dessen Einschiebens wieder in Richtung der geschlossenen Position. In der korrekten, aufgenommenen Position des Behälters in der Vorrichtung umklammern die Klammerarme den Behälter. Durch die magnetische Kraft, welche die Klammerarme in die geschlossene Position vorspannt, wird entsprechend von den Klammerarmen eine Haltekraft auf den Behälter ausgeübt.

Dadurch, dass keine Anordnung zum aktiven Öffnen der Klammerarme notwendig ist, können sich dort auch keine Verschmutzungen und/oder Keime ablagern. Durch das passive Öffnen ist die Vorrichtung mithin insbesondere für Anwendungen mit hohen Hygieneanforderungen wie aseptische Anlagen geeignet. Zudem weist eine derart ausgebildete Vorrichtung gegenüber Vorrichtungen, bei welchen die Klammerarme aktiv geöffnet werden, einen vereinfachten Aufbau auf, zudem sind derartige Vorrichtungen entsprechend wartungsärmer und kostengünstiger in der Herstellung.

Gemäß einer bevorzugten Ausführungsform ist die erste Schwenkachse relativ zu einer Aufnahmeseite, auf welcher die Behälter von der Vorrichtung aufgenommen beziehungsweise dieser zugeführt werden, gesehen weiter entfernt angeordnet, als die zweite Schwenkachse. Mit anderen Worten ist, wenn die Vorrichtung an einem Transportstern oder einem Behandlungskarussell angeordnet ist, ist die zweite Schwenkachse bezogen auf einen Drehpunkt des Transportsterns oder des Behandlungskarussells radial nach außen versetzt zu der ersten Schwenkachse. Die erste Schwenkachse liegt mithin auf einem Teilkreis mit einem kleineren Teilkreisdurchmesser als ein anderer Teilkreisdurchmesser, auf dem die zweite Schwenkachse liegt. Dadurch kann der zweite Klammerarm besonders kurz ausgebildet werden. Zur Herstellung des zweiten Klammerarms ist entsprechend lediglich ein geringer Materialaufwand notwendig. Zudem kann durch die Anordnung der zweiten Schwenkachse näher an der Aufnahmeseite eine günstige Verteilung beziehungsweise Aufteilung der Klemmkräfte, die von dem ersten Klammerarm und den zweiten Klammerarm auf einen gehaltenen Behälter ausgeübt werden, erzielt werden. Insbesondere kann so sichergestellt werden, dass auch bei der Aufnahme von verschiedenen Behältertypen mit unterschiedlicher Größe stets eine gleichbleibende Klemmkraft auf den gehaltenen Behälter ausgeübt wird.

Damit die Mitte beziehungsweise Mittelachse jedes gehaltenen Behältertyps bezogen auf die Vorrichtung stets an der gleichen Stelle ist, das heißt die Mitte beziehungsweise Mittelachse für jede Behältergröße auf demselben Teilkreisdurchmesser liegen, liegen gemäß einer weiteren bevorzugten Ausführungsform die erste Schwenkachse und die Mitte beziehungsweise Mittelachse des in den Klammerarmen gehaltenen Behälters auf einer Linie, die bezogen auf eine an einem Behandlungskarussell angeordnete Vorrichtung eine Drehachse des Behandlungskarussells schneidet.

Wenn gemäß einer weiteren bevorzugten Ausführungsform der erste Klammerarm mit einem in der Vorrichtung gehaltenen Behälter zwei Berührpunkte ausbildet und der zweite Klammerarm mit dem in der Vorrichtung gehaltenen Behälter einen Berührpunkt ausbildet, wird eine definierte, geometrisch eindeutig bestimmte Aufnahme des Behälters in den Klammerarmen erzielt.

Fertigungsungenauigkeiten oder Toleranzen des Behälters und/oder der Klammerarme können so ausgeglichen werden, ohne dass es zu einer unbestimmten oder überbestimmten Aufnahme des Behälters und dadurch beispielsweise zu einem Kippeln des Behälters in der Aufnahme oder einem Versatz des Behälters von der vorgegebenen Position in der Vorrichtung kommt.

Gemäß einer besonders bevorzugten weiteren Ausführungsform weist der erste Klammerarm einen ersten Kontaktbereich mit einer Krümmung größer als eine Krümmung eines Aufnahmebereichs eines kleinsten Behältertyps, an welchem der Behälter des kleinsten Behältertyps durch die Vorrichtung gehalten wird, auf, und weist einen relativ zum ersten Kontaktbereich näher an der ersten Schwenkachse gelegenen zweiten Kontaktbereich mit einer Krümmung kleiner als die Krümmung eines Aufnahmebereichs eines größten Behältertyps, an welchem der Behälter des größten Behältertyps durch die Vorrichtung gehalten wird, auf.

Nur zur Verdeutlichung weist beispielsweise bei einem genau kreisförmigen Aufnahmebereich ein Aufnahmebereich größerer Krümmung einen kleineren Radius des kreisförmigen Aufnahmebereichs auf, als ein Aufnahmebereich kleinerer Krümmung, der einen größeren Radius des kreisförmigen Aufnahmebereichs aufweist. Eine Gerade hat entsprechend eine Krümmung von Null.

Dadurch, dass der erste Kontaktbereich eine Krümmung größer als eine Krümmung eines Aufnahmebereichs eines kleinsten Behältertyps aufweist, wird auch ein in der Vorrichtung gehaltener Behälter des kleinsten Behältertyps nicht flächig sondern definiert an zwei Punkten durch den ersten Klammerarm gehalten. Durch das Vorsehen des zweiten Kontaktbereichs näher an der ersten Schwenkachse ist sichergestellt, dass auch große Behältertypen sicher durch den ersten Klammerarm gehalten werden. Gleichzeitig kann der erste Klammerarm dadurch sehr kompakt aufgebaut sein.

Gemäß einer bevorzugten Weiterführung weist der erste Klammerarm bei einer Aufnahme eines Behälters des kleinsten Behältertyps beide Berührpunkte im ersten Kontaktbereich auf, und weist der erste Klammerarm bei einer Aufnahme eines Behälters des größten Behältertyps einen äußeren Berührpunkt im ersten Kontaktbereich und einen inneren Berührpunkt im zweiten Kontaktbereich auf. Die zwei sich jeweils am ersten Klammerarm ausbildenden Berührpunkte mit dem gehaltenen Behälter können so jeweils mit einem bestmöglichen Abstand vorgesehen werden. Dadurch wird ein sicheres Halten jedes Behältertyps erzielt.

In einer weiteren bevorzugten Ausführungsform weist der zweite Klammerarm einen Kontaktbereich auf, dessen Krümmung kleiner ist als die Krümmung eines Aufnahmebereichs eines größten Behältertyps, an welchem der Behälter des größten Behältertyps durch die Vorrichtung gehalten wird. Dadurch bildet sich zwischen einem in der Vorrichtung gehaltenen Behälter und dem zweiten Klammerarm stets nur ein Berührpunkt aus.

Um eine besonders robuste und wartungsarme Vorrichtung zu erzielen, an welcher sich Verunreinigungen lediglich in geringem Maße absetzen können, kann die Kupplungsvorrichtung in Form einer an dem ersten Klammerarm angeordneten Zapfenelements und eine mit dem Zapfenelement in Eingriff stehenden, an dem zweiten Klammerarm angeordneten Taschenelements ausgebildet sein.

Bevorzugt weist das Zapfenelement eine abgerundete Oberfläche aus, die mit zumindest einer komplementär ausgebildeten Fläche des Taschenelements ein Gleiten relativ zueinander ermöglicht.

Mit anderen Worten bilden das Zapfenelement und das Taschenelement bevorzugt eine gelenkartige Verbindung aus, mittels welcher ein auf einen der beiden Klammerarme, bevorzugt auf den ersten Klammerarm, wirkendes Moment auf den anderen Klammerarm, bevorzugt den zweiten Klammerarm, übertragen werden kann. Durch die Kupplungsanordnung sind der erste und der zweite Klammerarm kinematisch miteinander gekoppelt, das heißt, der zweite Klammerarm weist relativ zu einer Position des ersten Klammerarms stets eine vorbestimmte Position auf, welche durch die Kupplungsanordnung vorgegeben wird.

Gemäß einer weiteren bevorzugten Ausführungsform weist das Zapfenelement zumindest an einer Kontaktzone mit dem Taschenelement ein weicheres Material als das Taschenelement auf, wobei bevorzugt das Zapfenelement einen Kunststoff, bevorzugt Polyethylenterephthalat (PET), Polyoxymethylen (POM) oder ein Polyetherketon (PEK), bevorzugt PEEK, PAEK, PEKK, PEEEK, PEEKK oder PEKEKK, aufweist und/oder das Taschenelement eine Stahllegierung, bevorzugt einen nichtrostenden Stahl, besonders bevorzugt eine Edelstahllegierung aufweist. Dadurch kommt es bei einer Relativbewegung von Zapfenelement und Taschenelement im Wesentlichen nur zu einem Abrieb beziehungsweise Verschleiß des weicheren Materials des Zapfenelements. Das Zapfenelement kann mithin als ein definiertes Verschleißelement vorgesehen werden. Bei einer Wartung ist dann stets lediglich das Zapfenelement beziehungsweise dessen weiches Material zumindest in der Kontaktzone auszutauschen.

Um einen besonders einfachen Aufbau und einen geringen Wartungsaufwand der Vorrichtung zu erzielen, ist das Zapfenelement gemäß einer weiteren bevorzugten Ausführungsform in Form eines Aufsteckelements zum Aufstecken auf den ersten Klammerarm ausgebildet, wobei das Aufsteckelement bevorzugt eine Aufnahme zum Aufnehmen eines Magneten aufweist.

Zum Bereitstellen der magnetischen Vorspannung auf die Klammerarme weist der erste Klammerarm gemäß einer bevorzugten Ausführungsform einen Magneten auf und/oder der Klammerträger weist mindestens einen auf einen Magneten oder ein ferromagnetisches Material des ersten Klammerarms wirkenden Trägermagneten auf.

Um einen besonders kompakten Aufbau und eine starke magnetische Vorspannung zu erzielen, sind gemäß einer weiteren bevorzugten Ausführungsform mindestens ein Kontaktbereich des ersten Klammerarms und ein Magnet des ersten Klammerarms bezogen auf die erste Schwenkachse auf gegenüberliegenden Seiten des Klammerarms angeordnet.

Die oben gestellte Aufgabe wird weiterhin durch eine Behandlungsvorrichtung zum Behandeln eines Behälters, bevorzugt zum Transportieren eines Behälters in einer Getränkeabfüllanlage, mit den Merkmalen des Anspruchs 7 gelöst. Vorteilhafte Weiterbildungen ergeben sich aus der vorliegenden Beschreibung und den Figuren.

Entsprechend wird eine Behandlungsvorrichtung zum Behandeln eines Behälters, bevorzugt zum Transportieren eines Behälters in einer Getränkeabfüllanlage, vorgeschlagen, welche ein Behandlungskarussell und mindestens eine an dem Behandlungskarussell angeordnete Vorrichtung zum Halten eines Behälters gemäß einer der vorstehenden Ausführungsformen umfasst.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Vorrichtung zum Halten eines Behälters;
- Figur 2: schematisch eine Draufsicht der Vorrichtung aus Figur 1;
- Figur 3: schematisch eine Schnittansicht der Vorrichtung aus Figur 2;
- Figur 4: schematisch eine Draufsicht einer einen Behälter haltenden Vorrichtung zum Halten eines Behälters gemäß einer weiteren Ausführungsform;
- Figur 5: schematisch eine Draufsicht der Vorrichtung aus Figur 4, einen Behälter eines anderen Behältertyps haltend;
- Figur 6: schematisch eine Draufsicht einer Vorrichtung gemäß einer nochmals anderen Ausführungsform; und
- Figur 7: schematisch eine Draufsicht einer Behandlungsvorrichtung zum Behandeln eines Behälters.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

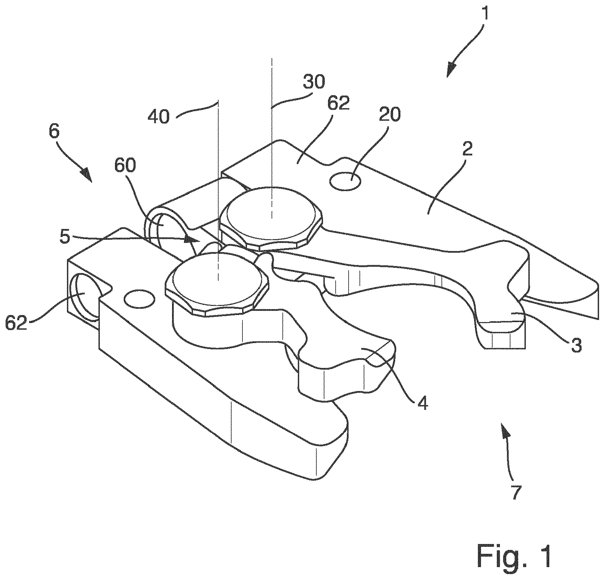

In Figur 1 ist schematisch eine perspektivische Seitenansicht einer Vorrichtung 1 zum Halten eines Behälters gezeigt. Die Vorrichtung 1 weist einen Klammerträger 2 auf, welcher mittels Befestigungselementen 20, hier in Form von Bohrungen, an eine Transportvorrichtung, insbesondere einem Transportstern oder einem Behandlungskarussell, einer Behälterbehandlungsmaschine angebunden werden kann.

An dem Klammerträger 2 ist ein erster Klammerarm 3 um eine erste Schwenkachse 30 herum schwenkbar angeordnet. Ferner ist ein zweiter Klammerarm 4 um eine zweite Schwenkachse 40 schwenkbar an dem Klammerträger 2 angeordnet. Der erste und der zweite Klammerarm 3, 4 bilden gemeinsam eine Klammer aus, in welcher ein zu haltender Behälter gehalten werden kann.

Der erste Klammerarm 3 und der zweite Klammerarm 4 sind magnetisch in eine geschlossene Position vorgespannt. Um die magnetische Vorspannung zu realisieren, weist die Vorrichtung 1 eine Magnetanordnung 6 auf, wobei der erste Klammerarm 3 einen Magneten 60 aufweist, auf welchen eine magnetische Kraft von zwei am Klammerträger 2 angeordneten Trägermagneten 62 wirkt. Durch die magnetische Kraft wird der erste Klammerarm 3 auf einer Aufnahmeseite 7, von welcher ein zu haltender Behälter der Vorrichtung 1 zugeführt werden beziehungsweise aufgenommen werden kann, in Richtung auf den zweiten Klammerarm 4 zu gedrückt.

Der erste Klammerarm 3 und der zweite Klammerarm 4 sind mittels einer Kupplungsvorrichtung 5 miteinander schwenkgekoppelt, so dass der zweite Klammerarm 4 bei einer Bewegung des ersten Klammerarms 3 eine entsprechende Bewegung erfährt und umgekehrt. Mit anderen Worten ist durch die Kupplungsvorrichtung 5 eine Position des ersten Klammerarms 3 relativ zu einer Position des zweiten Klammerarms 4 vorgegeben. Vorliegend sind der erste und der zweite Klammerarm 3, 4 derart miteinander gekoppelt, dass eine Bewegung eines Klammerarms 3, 4 eine entsprechende Gegenbewegung des anderen Klammerarms 4, 3 erzeugt.

Die Klammerarme 3, 4 sind magnetisch in eine geschlossene Position vorgespannt, so dass sich die Klammer stets in der geschlossenen Position befindet. Die Klammerarme 3, 4 sind dabei lediglich passiv zu öffnen. Mithin ist an der Vorrichtung 1 keine Anordnung zum aktiven Öffnen der Klammerarme vorgesehen. Das Öffnen der Klammerarme 3, 4 erfolgt passiv, das heißt durch ein Einschieben oder Eintauchen des Behälters in die Klammer, wobei die Behälterwand die Klammerarme 3, 4 beim Eintauchen auseinanderdrückt. Eine andere, aktive, Öffnung durch die Vorrichtung 1 selbst, bei welcher der Behälter nicht mit den Klammerarmen 3, 4 interagiert, ist nicht vorgesehen.

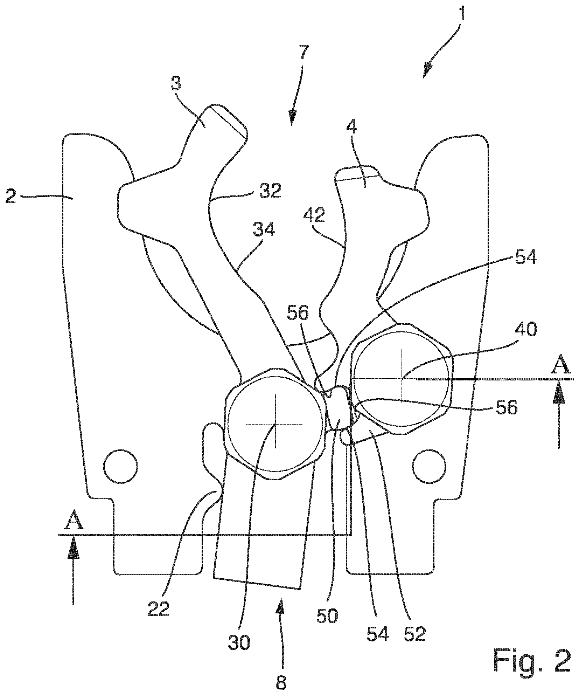

Figur 2 zeigt schematisch eine Draufsicht der Vorrichtung 1 aus Figur 1. Die erste Schwenkachse 30 ist relativ zur Aufnahmeseite 7 gesehen weiter entfernt angeordnet, als die zweite Schwenkachse 40. Mit anderen Worten ist, wenn die Vorrichtung 1 an einem Behandlungskarussell einer Behandlungsmaschine angeordnet ist, die zweite Schwenkachse 40 bezogen auf einen Drehpunkt des Behandlungskarussells radial nach außen versetzt zu der ersten Schwenkachse 30 angeordnet. Die erste Schwenkachse 30 liegt mithin auf einem Teilkreis mit einem kleineren Teilkreisdurchmesser, als ein Teilkreisdurchmesser, auf dem die zweite Schwenkachse 40 liegt. Ferner sind die Klammerarme 3, 4 asymmetrisch ausgebildet, der erste Klammerarm 3 ist signifikant länger ausgebildet als der zweite Klammerarm 4.

Der erste Klammerarm 3 ist derart ausgebildet, dass er mit einem in der Vorrichtung 1 gehaltenen Behälter (nicht gezeigt) zwei Berührpunkte ausbildet, wobei der erste Klammerarm 3 einen ersten Kontaktbereich 32 mit einer Krümmung größer als eine Krümmung eines Aufnahmebereichs oder Halsabschnitts eines kleinsten Behältertyps, an welchem der Behälter des kleinsten Behältertyps durch die Vorrichtung 1 gehalten wird, aufweist, und einen relativ zu dem ersten Kontaktbereich 32 näher an der ersten Schwenkachse 30 gelegenen zweiten Kontaktbereich 34 mit einer Krümmung kleiner als die Krümmung eines Aufnahmebereichs oder Halsabschnitts eines größten Behältertyps, an welchem der Behälter des größten Behältertyps durch die Vorrichtung 1 gehalten wird, aufweist.

Der zweite Klammerarm 4 ist derart ausgebildet, dass er mit einem in der Vorrichtung 1 gehaltenen Behälter nur einen Berührpunkt ausbildet. Um dies zu realisieren, weist der zweite Klammerarm 4 einen Kontaktbereich 42 auf, dessen Krümmung kleiner ist als die Krümmung eines Aufnahmebereichs eines größten Behältertyps, an welchem der Behälter des größten Behältertyps durch die Vorrichtung 1 gehalten wird.

Die Kupplungsvorrichtung 5 liegt im Wesentlichen zwischen der ersten Schwenkachse 30 und der zweiten Schwenkachse 40 und ist in Form eines an dem ersten Klammerarm 3 ausgebildeten Zapfenelements 50 und eines mit dem Zapfenelement 50 in Eingriff stehenden Taschenelements 52, welches an dem zweiten Klammerarm 4 ausgebildet, bereitgestellt. Bei einer Schwenkbewegung des ersten Klammerarms 3 erfährt der zweite Klammerarm 4 über die von dem Zapfenelement 50 auf das Taschenelement 52 übertragene Bewegung eine Schwenkbewegung um die zweite Schwenkachse 40, welche der Schwenkbewegung des ersten Klammerarms 3 entgegengerichtet ist.

Der Klammerträger 2 weist im Bereich einer der Aufnahmeseite 7 gegenübergelegenen Rückseite 8 einen Anschlag 22 auf, welcher die Schwenkbewegung des ersten Klammerarms 3 einseitig begrenzt. Durch den Anschlag 22 ist der Schwenkwinkel des ersten Klammerarms 3 in Bezug auf Figur 2 in Uhrzeigersinn gesehen beschränkt. Entsprechend ist durch die Position des Anschlags 22 ein Schließen der Klammerarme 3, 4 über die Anschlagposition hinaus verhindert. Über den Anschlag 22 ist somit eine maximal geschlossene Position der Klammer vorgegeben.

Das Zapfenelement 50 weist beidseitig abgerundete Oberflächen 54 auf, die mit komplementär ausgebildeten Flächen 56 des Taschenelements 52 ein Gleiten relativ zueinander ermöglichen.

Das Zapfenelement 50 weist im Bereich der abgerundeten Oberfläche einen Kunststoff, vorliegend PEK, auf. Das Taschenelement 52 weist eine nichtrostende Stahllegierung auf und ist folglich härter als das Zapfenelement 50. Entsprechend unterliegt im Wesentlichen lediglich das Zapfenelement 50 einem Verschleiß an den Kontaktzonen zwischen dem Zapfenelement 50 und dem Taschenelement 52. Durch den großen Unterschied in der Härte der Materialien des Taschenelements 52 und des Zapfenelements 50 und dem damit einhergehenden einseitigen Verschleiß auf Seiten des Zapfenelements 50 ist letzteres als definiertes Verschleißteil bereitgestellt.

Folglich erfolgt im Wesentlichen lediglich ein Abrieb auf den Oberflächen 54, durch welchen Unebenheiten und Poren entstehen können, und an beziehungsweise in welchen sich Verschmutzungen und Keime absetzen oder ablagern können. Durch einen Austausch des als Verschleißteil vorgesehenen Zapfenelements 50 können diese Verschmutzungen beseitigt werden. Ein Austauschen des Taschenelements 52 ist nicht notwendig.

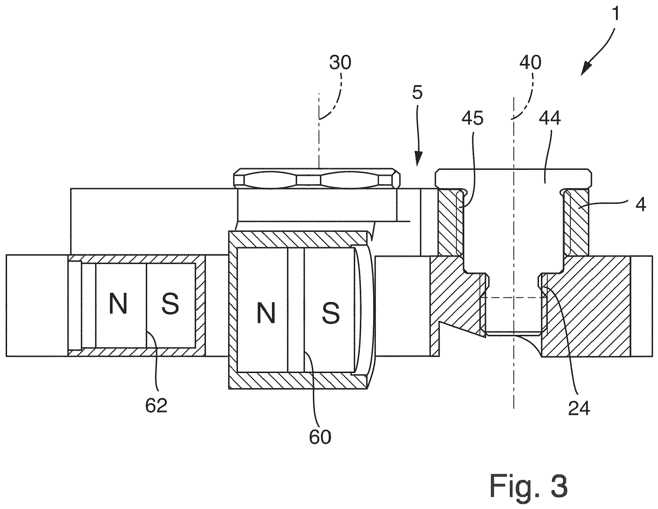

Figur 3 zeigt schematisch eine Schnittansicht der Vorrichtung 1 aus Figur 1 und 2 entlang der Schnittlinie A-A aus Figur 2. Das Taschenelement 52 ist einstückig mit dem zweiten Klammerarm 4 ausgebildet. Letzterer ist mittels eines Gewindebolzens 44 und einer Gewindebohrung 24 des Klammerträgers 2 an dem Klammerträger 2 befestigt. Um eine Schwenkbewegung des zweiten Klammerarms 4 um den Gewindebolzen 44 zu ermöglichen, ist zwischen Gewindebolzen 44 und zweitem Klammerarm 4 eine Verschleißbuchse 45 angeordnet.

Durch den Schnitt ist ferner einer der beiden Trägermagneten 62 und der Magnet 60 des ersten Klammerarms 3 offengelegt. Der Trägermagnet 62 und der Magnet 60 sind zueinander gegenpolig angeordnet. Mithin ziehen sich der Trägermagnet 62 und der Magnet 60 gegenseitig an. Der zweite, in dieser Ansicht nicht gezeigte, Trägermagnet, welcher in Figur 1 unter dem Bezugszeichen 62 angedeutet ist, ist entsprechend gleichpolig zu dem Magneten 60 angeordnet, so dass sich der in Figur 3 nicht gezeigte, zweite Trägermagnet und der Magnet 60 gegenseitig abstoßen. Durch die Anziehung zwischen dem ersten Trägermagneten 62 und dem Magneten 60 sowie der Abstoßung zwischen zweitem Trägermagnet und Magnet 60 wird der erste Klammerarm 3 mit einer magnetischen Kraft beaufschlagt, welche den ersten Klammerarm 3 und via der Kupplungsvorrichtung 5 ebenso der zweite Klammerarm 4 in die geschlossene Position vorspannt.

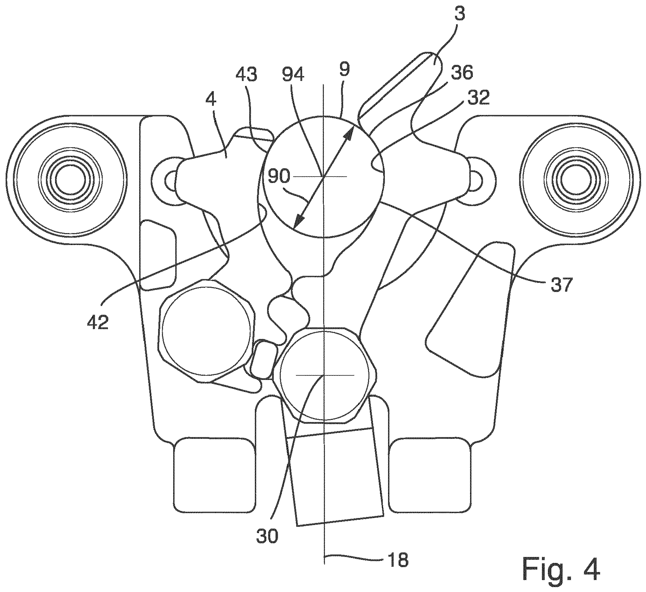

Figur 4 zeigt schematisch eine Draufsicht einer einen Behälter 9 haltenden Vorrichtung 1 zum Halten eines Behälters gemäß einer weiteren Ausführungsform. Die Vorrichtung 1 entspricht im Wesentlichen der Vorrichtung aus den Figuren 1 bis 3. Der in Figur 4 schematisch gezeigte Behälter 9 ist ein Behälter des kleinsten Behältertyps zu dessen Halten die Vorrichtung 1 ausgelegt ist. Da die Krümmung des ersten Kontaktbereichs 32 größer ist, als die Krümmung des Behälters 9 in seinem Aufnahmebereich, welcher einen ersten Behälterdurchmesser 90 aufweist, weist der erste Klammerarm 3 entsprechend zwei Berührpunkte 36, 37 mit dem Behälter 9 auf. Die Berührpunkte 36, 37 sind beide im ersten Kontaktbereich 32 angeordnet. Der zweite Klammerarm 4 weist einen Berührpunkt 43 mit dem Behälter 9 auf.

Die Mittelachse 94 des Behälters 9 und die erste Schwenkachse 30 liegen auf einer Linie 18, welche, wenn die Vorrichtung 1 an einem Behandlungskarussell angeordnet ist, eine Drehachse des Behandlungskarussells schneidet.

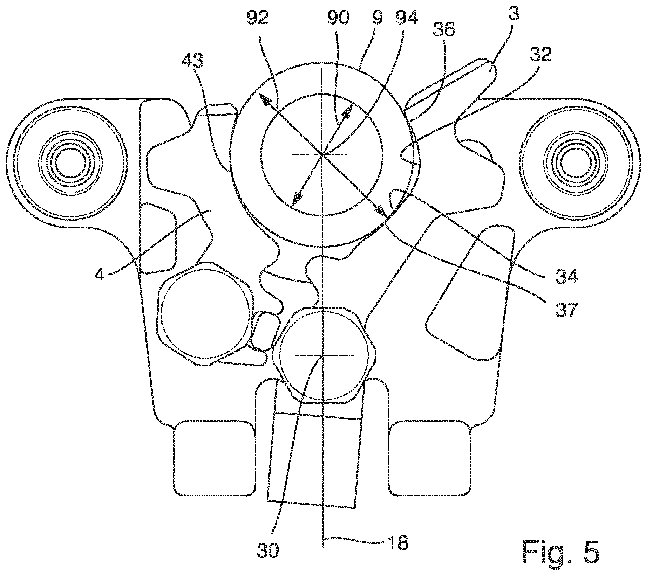

Aus Figur 5 ist schematisch eine Draufsicht der Vorrichtung 1 aus Figur 4 mit einem schematisch angedeuteten Behälter 9 eines weiteren Behältertyps mit einer zweiten Behälterdurchmesser 92, der größer ist als der erste Behälterdurchmesser 90, gezeigt. Zur Verdeutlichung ist der erste Behälterdurchmesser beim Bezugszeichen 90 erneut in gestrichelter Form dargestellt.

Der erste Klammerarm 3 bildet einen ersten, äußeren Berührpunkt 36 im ersten Kontaktereich 32 und einen zweiten, inneren Berührpunkt 37 im zweiten Kontaktbereich 34 aus. Der zweite Klammerarm 4 und der Behälter 9 weisen wiederum nur einen Berührpunkt 43 auf. Dadurch ist ermöglicht, dass die Mittelachse 94 des größeren Behälters 9 sich an der gleichen Position befindet, wie die Mittelachse 94 des kleineren Behälters 9 in Figur 4.

Die Mittelachse 94 von Behältern 9 verschiedenen Behältertyps liegt somit bezogen auf die Vorrichtung 1 stets an der gleichen Position. Insbesondere kommt es durch den Aufbau der Vorrichtung 1 nicht zu einem Versatz der Mittelachse 94 längs der Linie 18 bei Aufnahme eines anderen Behältertyps. Die Vorrichtung 1 ist folglich dazu in der Lage, dass Behälter 9 unterschiedlichen Behältertyps stets entlang desselben Teilkreisdurchmessers geführt werden können.

Die Mittelachse 94 des Behälters 9 und die erste Schwenkachse 30 liegen wiederum auf einer Linie 18, welche, wenn die Vorrichtung 1 an einem Behandlungskarussell angeordnet ist, eine Drehachse des Behandlungskarussells schneidet.

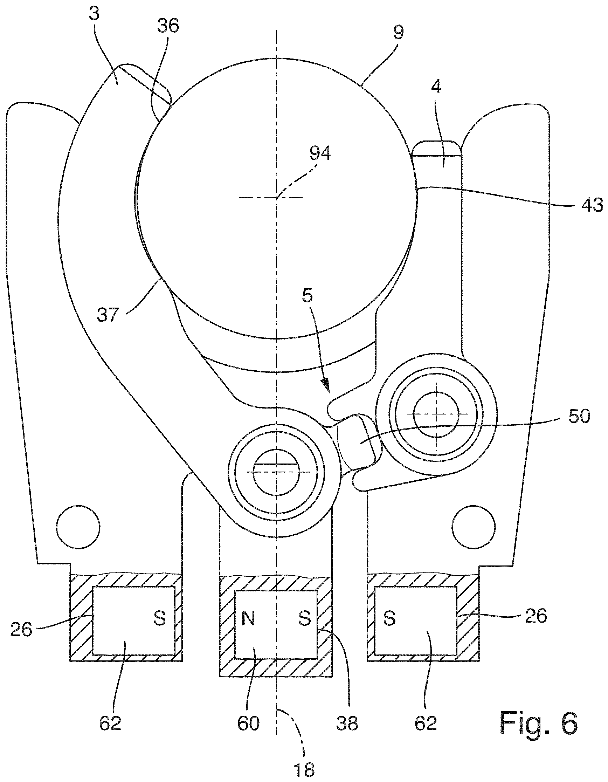

Figur 6 zeigt schematisch eine Draufsicht einer Vorrichtung 1 gemäß einer weiteren Ausführungsform. Sie entspricht in ihrem Aufbau im Wesentlichen den vorgenannten Ausführungsformen. Die hier gezeigte Vorrichtung 1 hält einen Behälter 9 eines dritten Behältertyps. Der erste Klammerarm 3 bildet mit dem Behälter 9 zwei Berührpunkte 36, 37 und der zweite Klammerarm 4 bildet mit dem Behälter 9 einen Berührpunkt 43 aus.

Das Zapfenelement 50 ist hier ferner in Form eines Aufsteckelements aus PEK zum Aufstecken auf den ersten Klammerarm 3 ausgebildet, wobei das Aufsteckelement bevorzugt eine mittels Ultraschallschweißens verschlossene Aufnahme 38 aufweist, in welcher der Magnet 60 aufgenommen ist. Die beiden Trägermagnete 62 sind beidseits des Magneten 60 in entsprechenden Aufnahmen 26 des Trägers 2 angeordnet.

Aufgrund der Anordnung der Trägermagnete 62 und des Magnets 60 werden die Klammerarme 3, 4 mit einer magnetischen Kraft beaufschlagt, welche über die erste Schwenkachse 30, sowie die Kupplungsvorrichtung 5 und die zweite Schwenkachse 40 ein Schließmoment in Richtung der geschlossenen Position der Klammerarme 3, 4 erzeugt, so dass der Behälter 9 sicher in der Vorrichtung 1 gehalten ist.

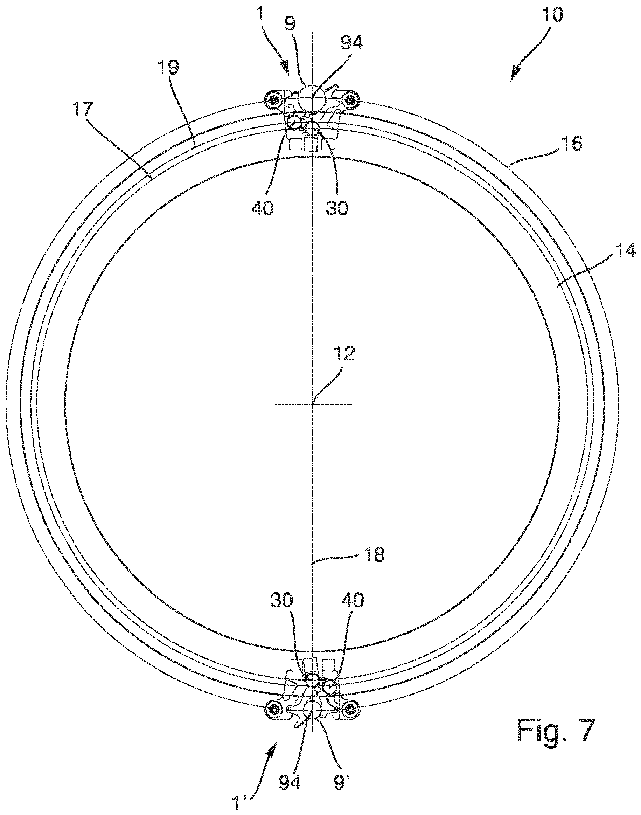

Figur 7 zeigt schematisch eine Draufsicht einer Behandlungsvorrichtung 10 zum Behandeln eines Behälters. Die Behandlungsvorrichtung 10 weist ein Behandlungskarussell 14 auf, an welchem eine Vielzahl von Vorrichtungen 1, 1' zum Halten eines Behälters angeordnet sind, wobei vorliegend eine erste Vorrichtung 1 gezeigt ist, welche einen Behälter 9 entsprechend Figur 4 hält, und eine zweite Vorrichtung 1' gezeigt ist, welche einen Behälter 9' entsprechend Figur 5 hält. Die Mittelachsen 94 der beiden Behälter 9, 9' liegen auf einem gemeinsamen Teilkreis. Die Vorrichtungen sind an dem Behandlungskarussell dabei derart angeordnet, dass die Linie 18 die Drehachse 12 des Behandlungskarussells schneidet.

Ferner sind die Teilkreise 17, 19 der Schwenkachsen 30, 40 gezeigt. Der Teilkreis 17 der ersten Schwenkachse 30 ist kleiner als der Teilkreis 19 der zweiten Schwenkachse 40. Die erste Schwenkachse 30 ist folglich in Bezug auf die Drehachse 12 radial weiter innen angeordnet als die entsprechend zur ersten Schwenkachse 30 radial nach außen versetzte, zweite Schwenkachse 40.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Klammerträger
- 20: Befestigungselement
- 22: Anschlag
- 24: Gewindebohrung
- 26: Aufnahme

- 3: Erster Klammerarm
- 30: Erste Schwenkachse
- 32: Erster Kontaktbereich
- 34: Zweiter Kontaktbereich
- 36: Äußerer Berührpunkt
- 37: Innerer Berührpunkt
- 38: Aufnahme

- 4: Zweiter Klammerarm
- 40: Zweite Schwenkachse
- 42: Kontaktbereich
- 43: Berührpunkt
- 44: Gewindebolzen
- 45: Verschleißbuchse

- 5: Kupplungsvorrichtung
- 50: Zapfenelement
- 52: Taschenelement
- 54: Oberfläche
- 56: Fläche

- 6: Magnetanordnung
- 60: Magnet
- 62: Trägermagnet

- 7: Aufnahmeseite
- 8: Rückseite
- 9: Behälter
- 90: Erster Behälterdurchmesser
- 92: Zweiter Behälterdurchmesser
- 94: Mittelachse

- 10: Behandlungsvorrichtung
- 12: Drehachse
- 14: Behandlungskarussell
- 16: Teilkreisdurchmesser
- 17: Teilkreis
- 18: Linie
- 19: Teilkreis

## Patentansprüche

1. Vorrichtung (1) zum Halten eines Behälters (9) in einer Behälterbehandlungsvorrichtung (10), bevorzugt zum Halten einer Flasche an ihrem Flaschenhals, umfassend einen Klammerträger (2), einen ersten Klammerarm (3), der um eine erste Schwenkachse (30) schwenkbar an dem Klammerträger (2) angeordnet ist, und einen zweiten Klammerarm (4), der um eine zweite Schwenkachse (40) schwenkbar an dem Klammerträger (2) angeordnet ist, wobei der erste Klammerarm (3) länger ausgebildet ist als der zweite Klammerarm (4), und wobei der erste Klammerarm (3) und der zweite Klammerarm (4) über eine Kupplungsanordnung (5) miteinander schwenkgekoppelt sind, und die Klammerarme (3, 4) magnetisch in eine geschlossene Position vorgespannt sind,
**dadurch gekennzeichnet, dass**
die Vorrichtung (1) so eingerichtet ist, dass die Klammerarme (3, 4) zum Aufnehmen eines Behälters (9) lediglich passiv durch Einschieben des Behälters (9) geöffnet werden.

2. Vorrichtung (1) gemäß Anspruch 1, **dadurch gekennzeichnet, dass** die Kupplungsvorrichtung (5) in Form einer an dem ersten Klammerarm (3) angeordneten Zapfenelements (50) und eine mit dem Zapfenelement (50) in Eingriff stehenden, an dem zweiten Klammerarm (4) angeordneten Taschenelements (52) ausgebildet ist.

3. Vorrichtung (1) gemäß Anspruch 2, **dadurch gekennzeichnet, dass** das Zapfenelement (50) zumindest an einer Kontaktzone mit dem Taschenelement (52) ein weicheres Material als das Taschenelement (52) aufweist, wobei bevorzugt das Zapfenelement (50) einen Kunststoff, bevorzugt Polyethylenterephthalat (PET), Polyoxymethylen (POM) oder ein Polyetherketon (PEK), bevorzugt PEEK, PAEK, PEKK, PEEEK, PEEKK oder PEKEKK, aufweist und/oder das Taschenelement (52) eine Stahllegierung, bevorzugt einen nichtrostenden Stahl, besonders bevorzugt eine Edelstahllegierung aufweist.

4. Vorrichtung (1) nach einem der Ansprüche 2 oder 3, **dadurch gekennzeichnet, dass** das Zapfenelement (50) in Form eines Aufsteckelements zum Aufstecken auf den ersten Klammerarm (3) ausgebildet ist, wobei das Aufsteckelement bevorzugt eine Aufnahme (38) zum Aufnehmen eines Magneten (60) aufweist.

5. Vorrichtung (1) gemäß einem der vorstehenden Ansprüche, **dadurch gekennzeichnet, dass** der erste Klammerarm (3) einen Magneten (60) aufweist und/oder dass der Klammerträger (2) mindestens einen auf den Magneten (60) des ersten Klammerarms (3) wirkenden Trägermagneten (62) aufweist.

6. Vorrichtung (1) gemäß Anspruch 5, **dadurch gekennzeichnet, dass** mindestens ein Kontaktbereich (32, 34) des ersten Klammerarms (3) und der Magnet (60) bezogen auf die erste Schwenkachse (30) auf gegenüberliegenden Seiten des Klammerarms (3) angeordnet sind.

7. Behandlungsvorrichtung (10) mit Behälter (9) zum Behandeln des Behälters (9), bevorzugt zum Transportieren des Behälters (9) in einer Getränkeabfüllanlage, umfassend ein Behandlungskarussell (14) und mindestens eine an dem Behandlungskarussell (14) angeordnete Vorrichtung (1) zum Halten eines Behälters (9) gemäß einem der vorstehenden Ansprüche.

8. Behandlungsvorrichtung (10) gemäß Anspruch 7, **dadurch gekennzeichnet, dass** die erste Schwenkachse (30) relativ zu einer Aufnahmeseite (7), auf welcher der Behälter (9) von der Vorrichtung (1) aufgenommen wird, gesehen weiter entfernt angeordnet ist, als die zweite Schwenkachse (40), so dass die zweite Schwenkachse (40) bezogen auf eine Drehachse (12) des Behandlungskarussells (14) radial nach außen versetzt ist zur ersten Schwenkachse (30).

9. Behandlungsvorrichtung (10) gemäß Anspruch 7 oder 8, **dadurch gekennzeichnet, dass** die erste Schwenkachse (30) und eine Mitte beziehungsweise Mittelachse (94) des in den Klammerarmen (3, 4) gehaltenen Behälters (9) auf einer Linie (18) liegen, die bezogen auf eine an einem Behandlungskarussell (14) angeordnete Vorrichtung (1) eine Drehachse (12) des Behandlungskarussells (14) schneidet.

10. Behandlungsvorrichtung (10) gemäß einem der Ansprüche 7 bis 9, **dadurch gekennzeichnet, dass** der erste Klammerarm (3) mit einem in der Vorrichtung (1) gehaltenen Behälter (9) zwei Berührpunkte (36, 37) ausbildet und der zweite Klammerarm (4) mit dem in der Vorrichtung (1) gehaltenen Behälter (9) einen Berührpunkt (43) ausbildet.

11. Behandlungsvorrichtung (10) gemäß einem der Ansprüche 7 bis 10, **dadurch gekennzeichnet, dass** der erste Klammerarm (3) einen ersten Kontaktbereich (32) mit einer Krümmung größer als eine Krümmung eines Aufnahmebereichs eines kleinsten Behältertyps, an welchem der Behälter (9) des kleinsten Behältertyps durch die Vorrichtung (1) gehalten wird, aufweist, und einen relativ zu den ersten Kontaktbereich (32) näher an der ersten Schwenkachse (30) gelegenen zweiten Kontaktbereich (34) mit einer Krümmung kleiner als die Krümmung eines Aufnahmebereichs eines größten Behältertyps, an welchem der Behälter (9) des größten Behältertyps durch die Vorrichtung (1) gehalten wird, aufweist.

12. Behandlungsvorrichtung (10) gemäß Anspruch 11, **dadurch gekennzeichnet, dass** der erste Klammerarm (3) bei einer Aufnahme eines Behälters (9) des kleinsten Behältertyps beide Berührpunkte (36, 37) im ersten Kontaktbereich (32) aufweist, und der erste Klammerarm (3) bei einer Aufnahme eines Behälters (9) des größten Behältertyps einen äußeren Berührpunkt (36) im ersten Kontaktbereich (32) und einen inneren Berührpunkt (37) im zweiten Kontaktbereich (34) aufweist.

13. Behandlungsvorrichtung (10) gemäß einem der Ansprüche 7 bis 12, **dadurch gekennzeichnet, dass** der zweite Klammerarm (4) einen Kontaktbereich (42) aufweist, dessen Krümmung kleiner ist als die Krümmung eines Aufnahmebereichs eines größten Behältertyps, an welchem der Behälter (9) des größten Behältertyps durch die Vorrichtung (1) gehalten wird.

## Claims

1. Device (1) for holding a container (9) in a container treatment device (10), preferably for holding a bottle at the bottle neck thereof, comprising a clasp carrier (2), a first clasp arm (3) arranged on the clasp carrier (2) so as to be pivotable about a first pivot axis (30), and a second clasp arm (4) arranged on the clasp carrier (2) so as to be pivotable about a second pivot axis (40), wherein the first clasp arm (3) is longer than the second clasp arm (4), and wherein the first clasp arm (3) and the second clasp arm (4) are pivotally coupled to one another via a coupling arrangement (5), and the clasp arms (3, 4) are magnetically prestressed into a closed position,
**characterised in that**
the device (1) is configured such that the clasp arms (3, 4) for receiving a container (9) are only opened passively by inserting the container (9).

2. Device (1) according to claim 1, **characterised in that** the coupling device (5) is arranged in the form of a peg element (50) arranged on the first clasp arm (3) and a pocket element (52) which engages with the peg element (50) and is arranged on the second clasp arm (4).

3. Device (1) according to claim 2, **characterised in that** the peg element (50) has a softer material than the pocket element (52) at least in a zone of contact with the pocket element (52), wherein preferably the peg element (50) has a plastic, preferably polyethylene terephthalate (PET), polyoxymethylene (POM) or a polyether ketone (PEK), preferably PEEK, PAEK, PEKK, PEEEK, PEEKK or PEKEKK, and/or the pocket element (52) has a steel alloy, preferably a stainless steel, particularly preferably a premium steel alloy.

4. Device (1) according to any one of claims 2 or 3, **characterised in that** the peg element (50) is configured in the form of a mounting element to be mounted on the first clasp arm (3), wherein the mounting element preferably has a receptacle (38) for receiving a magnet (60).

5. Device (1) according to any one of the preceding claims, **characterised in that** the first clasp arm (3) has a magnet (60) and/or **in that** the clasp carrier (2) has at least one carrier magnet (62) acting on the magnet (60) of the first clasp arm (3).

6. Device (1) according to claim 5, **characterised in that** at least one contact region (32, 34) of the first clasp arm (3) and the magnet (60) are arranged on opposite sides of the clasp arm (3) in relation to the first pivot axis (30).

7. Treatment device (10) with a container (9) for treating the container (9), preferably for transporting the container (9) in a beverage filling plant, comprising a treatment carousel (14) and at least one device (1) arranged on the treatment carousel (14) for holding a container (9) according to any one of the preceding claims.

8. Treatment device (10) according to claim 7, **characterised in that** the first pivot axis (30) is arranged further away from a receiving side (7) on which the container (9) is received by the device (1) than the second pivot axis (40), such that the second pivot axis (40) is offset radially outwards from the first pivot axis (30) in relation to an axis of rotation (12) of the treatment carousel (14).

9. Treatment device (10) according to claim 7 or 8, **characterised in that** the first pivot axis (30) and a center or central axis (94) of the container (9) held in the clasp arms (3, 4) are situated on a line (18) which, in relation to a device (1) arranged on a treatment carousel (14), intersects an axis of rotation (12) of the treatment carousel (14).

10. Treatment device (10) according to any one of claims 7 to 9, **characterised in that** the first clasp arm (3) forms two points of contact (36, 37) with a container (9) held in the device (1) and the second clasp arm (4) forms one point of contact (43) with the container (9) held in the device (1).

11. Treatment device (10) according to any one of claims 7 to 10, **characterised in that** the first clasp arm (3) has a first contact region (32) with a curvature greater than a curvature of a receiving region of a smallest container type, on which the container (9) of the smallest container type is held by the device (1), and a second contact region (34) situated closer to the first pivot axis (30) than the first contact region (32) and having a curvature smaller than the curvature of a receiving region of a largest container type, on which the container (9) of the largest container type is held by the device (1).

12. Treatment device (10) according to claim 11, **characterised in that** the first clasp arm (3) has both points of contact (36, 37) in the first contact region (32) when receiving a container (9) of the smallest container type, and the first clasp arm (3) has an outer point of contact (36) in the first contact region (32) and an inner point of contact (37) in the second contact region (34) when receiving a container (9) of the largest container type.

13. Treatment device (10) according to any one of claims 7 to 12, **characterised in that** the second clasp arm (4) has a contact region (42) whose curvature is smaller than the curvature of a receiving region of a largest container type, on which the container (9) of the largest container type is held by the device (1).

## Revendications

1. Dispositif (1) de retenue d'un récipient (9) dans un dispositif de traitement de récipient (10), de préférence pour la retenue d'une bouteille à son goulot, comprenant un support de pince (2), un premier bras de pince (3) qui est agencé de manière pivotante autour d'un premier axe de pivotement (30) au niveau du support de pince (2), et un second bras de pince (4) qui est agencé de manière pivotante autour d'un second axe de pivotement (40) au niveau du support de pince (2), dans lequel le premier bras de pince (3) est réalisé plus long que le second bras de pince (4), et dans lequel le premier bras pince (3) et le second bras de pince (4) sont couplés en pivotement entre eux par le biais d'un agencement de couplage (5), et les bras de pince (3, 4) sont précontraints magnétiquement dans une position fermée,
**caractérisé en ce que**
le dispositif (1) est conçu de sorte que les bras de pince (3, 4) soient ouverts pour la réception d'un récipient (9) juste passivement par enfoncement du récipient (9).

2. Dispositif (1) selon la revendication 1, **caractérisé en ce que** le dispositif de couplage (5) est réalisé sous la forme d'un élément de tenon (50) agencé au niveau du premier bras de pince (3) et un élément de poche (52) se trouvant en prise avec l'élément de tenon (50), agencé au niveau du second bras de pince (4).

3. Dispositif (1) selon la revendication 2, **caractérisé en ce que** l'élément de tenon (50) présente au moins au niveau d'une zone de contact avec l'élément de poche (52) un matériau plus mou que l'élément de poche (52), dans lequel de préférence l'élément de tenon (50) présente une matière plastique, de préférence du téréphtalate de polyéthylène (PET), du polyoxyméthylène (POM) ou un polyéthercétone (PEK), de préférence PEEK, PAEK, PEKK, PEEEK, PEEKK ou PEKEKK, et/ou l'élément de poche (52) présente un alliage d'acier, de préférence un acier inoxydable, de manière particulièrement préférée un alliage d'acier spécial.

4. Dispositif (1) selon l'une quelconque des revendications 2 ou 3, **caractérisé en ce que** l'élément de tenon (50) est réalisé sous la forme d'un élément d'enfichage pour l'enfichage sur le premier bras de pince (3), dans lequel l'élément d'enfichage présente de préférence un logement (38) pour la réception d'un aimant (60).

5. Dispositif (1) selon l'une quelconque des revendications précédentes, **caractérisé en ce que** le premier bras de pince (3) présente un aimant (60) et/ou **en ce que** le support de pince (2) présente au moins un aimant de support (62) agissant sur l'aimant (60) du premier bras de pince (3).

6. Dispositif (1) selon la revendication 5, **caractérisé en ce qu'**au moins une zone de contact (32, 34) du premier bras de pince (3) et l'aimant (60) sont agencés par rapport au premier axe de pivotement (30) sur des côtés opposés du bras de pince (3).

7. Dispositif de traitement (10) avec un récipient (9) pour le traitement du récipient (9), de préférence pour le transport du récipient (9) dans une installation de remplissage de boissons, comprenant un carrousel de traitement (14) et au moins un dispositif (1) agencé au niveau du carrousel de traitement (14) pour la retenue d'un récipient (9) selon l'une quelconque des revendications précédentes.

8. Dispositif de traitement (10) selon la revendication 7, **caractérisé en ce que** le premier axe de pivotement (30) est agencé par rapport à un côté de réception (7), sur lequel le récipient (9) est reçu par le dispositif (1), plus éloigné que le second axe de pivotement (40) de sorte que le second axe de pivotement (40) soit décalé radialement vers l'extérieur par rapport à un axe de rotation (12) du carrousel de traitement (14) vers le premier axe de pivotement (30).

9. Dispositif de traitement (10) selon la revendication 7 ou 8, **caractérisé en ce, que** le premier axe de pivotement (30) et un milieu ou axe médian (94) du récipient (9) maintenu dans les bras de pince (3, 4) se trouvent sur une ligne (18) qui coupe un axe de rotation (12) du carrousel de traitement (14) par rapport à un dispositif (1) agencé au niveau d'un carrousel de traitement (14).

10. Dispositif de traitement (10) selon l'une quelconque des revendications 7 à 9, **caractérisé en ce que** le premier bras de pince (3) forme avec un récipient (9) maintenu dans le dispositif (1) deux points de contact (36, 37) et le second bras de pince (4) forme avec le récipient (9) maintenu dans le dispositif (1) un point de contact (43).

11. Dispositif de traitement (10) selon l'une quelconque des revendications 7 à 10, **caractérisé en ce que** le premier bras de pince (3) présente une première zone de contact (32) avec une courbure supérieure à une courbure d'une zone de réception d'un plus petit type de récipient, au niveau duquel le récipient (9) du plus petit type de récipient est maintenu par le dispositif (1), et présente une seconde zone de contact (34) placée par rapport à la première zone de contact (32) plus près du premier axe de pivotement (30) avec une courbure inférieure à la courbure d'une zone de réception d'un type de récipient le plus grand, au niveau de laquelle le récipient (9) du plus grand type de récipient est maintenu par le dispositif (1).

12. Dispositif de traitement (10) selon la revendication 11, **caractérisé en ce que** le premier bras de pince (3) présente pour un logement d'un récipient (9) du plus petit type de récipient les deux points de contact (36, 37) dans la première zone de contact (32), et le premier bras de pince (3) présente pour un logement d'un récipient (9) du plus grand type de récipient un point de contact extérieur (36) dans la première zone de contact (32) et un point de contact intérieur (37) dans la seconde zone de contact (34).

13. Dispositif de traitement (10) selon l'une quelconque des revendications 7 à 12, **caractérisé en ce que** le second bras de pince (4) présente une zone de contact (42), dont la courbure est inférieure à la courbure d'une zone de réception d'un plus grand type de récipient, au niveau duquel le récipient (9) du plus grand type de récipient est maintenu par le dispositif (1).
